(19) Europäisches Patentamt / European Patent Office / Office européen des brevets

(11) **EP 3 466 671 A1**

(12) **EUROPEAN PATENT APPLICATION**
published in accordance with Art. 153(4) EPC

(43) Date of publication:
**10.04.2019 Bulletin 2019/15**

(21) Application number: **17806617.1**

(22) Date of filing: **29.05.2017**

(51) Int Cl.:
**B32B 5/24** *(2006.01)*    **B32B 27/40** *(2006.01)*
**D02G 3/04** *(2006.01)*    **D06M 15/564** *(2006.01)*

(86) International application number:
**PCT/JP2017/019948**

(87) International publication number:
**WO 2017/209062 (07.12.2017 Gazette 2017/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **03.06.2016 JP 2016111927**

(71) Applicant: **Unitika Trading Co., Ltd.
Chuo-ku, Osaka 541-0053 (JP)**

(72) Inventors:
• **NISHIYAMA, Takeshi
  Tokyo 103-0022 (JP)**
• **KITASAKA, Daisuke
  Tokyo 103-0022 (JP)**

(74) Representative: **Müller-Boré & Partner
Patentanwälte PartG mbB
Friedenheimer Brücke 21
80639 München (DE)**

(54) **LAMINATED FABRIC AND METHOD FOR MANUFACTURING SAME**

(57)    Provided is a laminated fabric which has excellent water repellency and moisture-permeable waterproofness, and in which the interlayer delamination of a woven or knitted fabric and a moisture-permeable waterproof layer is suppressed. This laminated fabric has a moisture-permeable waterproof layer on one surface of a woven or knitted fabric. The woven or knitted fabric contains an entangled combined-filament yarn containing a polyester fiber A having a monofilament fineness of 0.2-0.9 dtex and a polyester fiber B having a monofilament fineness of 1.0-5.0 dtex, wherein the entangled combined-filament yarn is false-twist crimped as a whole, the mass ratio (A/B) of the polyester fiber A and the polyester fiber B is in the range of 20/80 to 80/20, and protrusions are formed by the polyester fiber A on the surface portion of the entangled combined-filament yarn. The cover factor of the woven or knitted fabric is 1800-2800. A water-repellent agent is attached to the surface of the woven or knitted fabric on the reverse side from the moisture-permeable waterproof layer.

EP 3 466 671 A1

**Description**

TECHNICAL FIELD

The present invention relates to a laminated fabric that is excellent in water repellency and moisture permeability and waterproofness, which has high tear strength and which is resistant to delamination between a woven or knitted fabric and a moisture-permeable waterproof layer, and a method for manufacturing the laminated fabric.

BACKGROUND ART

A woven or knitted fabric having water-repellent performance has been heretofore desired in the field of uniform clothing, sports clothing or the like, and many water-repellent woven or knitted fabrics have been proposed in the past. For example, Patent Documents 1 and 2 describe a technique in which a water-repellent agent is devised to impart high water-repellent performance to a woven or knitted fabric. In addition, Patent Documents 3 and 4 propose a technique in which fine irregularity structures are provided on a surface of a woven or knitted fabric to develop a Lotus effect of supporting water droplets at points, so that water-repellent performance is improved.

PRIOR ART DOCUMENTS

PATENT DOCUMENTS

> Patent Document 1: Japanese Patent Laid-open Publication No. 2007-231442
> Patent Document 2: Japanese Patent Laid-open Publication No. 2002-201463
> Patent Document 3: Japanese Patent Publication No. 5-83666
> Patent Document 4: Japanese Patent Publication No. 4-5786

SUMMARY OF THE INVENTION

PROBLEMS TO BE SOLVED BY THE INVENTION

However, water-repellent woven or knitted fabrics obtained by employing the techniques disclosed in Patent Documents 1 to 4 have insufficient waterproofness (water resistance), and thus, for example, when the woven or knitted fabrics are used for clothing, penetration of rainwater to the body cannot be sufficiently suppressed in exposure to an intense rainfall such as unexpectedly strong rain (local heavy rain). Thus, for the purpose of suppressing penetration of rainwater etc., a moisture-permeable waterproof layer formed of a resin may be provided on a water-repellent woven or knitted fabric by coating or the like. In this case, however, moisture permeability is deteriorated, so that the humidity in the cloth becomes excessively high, and therefore comfortability cannot be secured. In addition, when a moisture-permeable waterproof layer is provided on a woven or knitted fabric, there is the problem that the moisture-permeable waterproof layer and the woven or knitted fabric are easily peeled from each other. In addition, a water-repellent woven or knitted fabric is also required to have high tear strength and excellent strength as essential physical properties, and for putting the water-repellent woven or knitted fabric to practical use, it is important to impart high tear strength along with water repellency, moisture permeability and waterproofness, and resistance to delamination.

The present invention overcomes the above- mentioned disadvantages of conventional techniques, and a main object of the present invention is to provide a laminated fabric including a woven or knitted fabric and a moisture-permeable waterproof layer, the laminated fabric being excellent in water repellency and moisture permeability and waterproofness, having high tear strength, and being resistant to delamination between the woven or knitted fabric and the moisture-permeable waterproof layer.

MEANS FOR SOLVING THE PROBLEMS

The present inventors have extensively conducted studies, and resultantly found by devising a configuration of a woven or knitted fabric in a laminated fabric including the woven or knitted fabric and a moisture-permeable waterproof layer, a laminated fabric is obtained which has high tear strength along with excellent water repellency and moisture permeability and waterproofness and which is resistant to delamination between the woven or knitted fabric and the moisture-permeable waterproof layer. Specifically, the present inventors have found that excellent water repellency, moisture permeability and waterproofness, and high tear strength can be exhibited, and delamination between the woven or knitted fabric and the moisture-permeable waterproof layer can be suppressed, when a woven or knitted fabric which is formed of an entangled combined-filament yarn having the following properties (i) to (iv) and which has a cover factor of 1800 to 2800 is employed, a moisture-permeable waterproof layer is laminated to one surface of the woven or knitted fabric, and a water-repellent agent is adhered on the other surface of the woven or knitted fabric.

(i) The entangled combined-filament yarn includes polyester fiber A having a monofilament fineness of 0.2 to 0.9 dtex, and polyester fiber B having a monofilament fineness of 1.0 to 5.0 dtex.
(ii) The entangled combined-filament yarn is false-twist-crimped as a whole.
(iii) The mass ratio of the polyester fiber A and the polyester fiber B (A/B) is in a range of 20/80 to 80/20.
(iv) Protrusions made of polyester fiber A are formed on a surface portion.

The present invention has been completed by further conducting studies based on the above-mentioned findings. That is, the present invention provides an invention having the aspects described in (1) to (12) below.

(1) A laminated fabric comprising a moisture-permeable waterproof layer on one surface of a woven or knitted fabric, wherein
the woven or knitted fabric contains an entangled combined-filament yarn including polyester fiber A having a monofilament fineness of 0.2 to 0.9 dtex and polyester fiber B having a monofilament fineness of 1.0 to 5.0 dtex,
the entangled combined-filament yarn is false-twist-crimped as a whole, and the mass ratio of the polyester fiber A and the polyester fiber B (A/B) is in a range of 20/80 to 80/20,
the entangled combined-filament yarn has protrusions made of polyester fiber A on a surface portion,
the woven or knitted fabric has a cover factor of 1800 to 2800, and
a water-repellent agent is adhered on a surface of the woven or knitted fabric on a side opposite to the moisture-permeable waterproof layer.
(2) The laminated fabric according to (1), wherein the crimping rate of the entangled combined-filament yarn is in a range of 10 to 55%.
(3) The laminated fabric according to (1) or (2), wherein the number of entanglements formed by the entangled combined-filament yarn is in a range of 90/m to 200/m.
(4) The laminated fabric according to any one of (1) to (3), wherein the moisture-permeable waterproof layer is formed of a polyurethane resin.
(5) The laminated fabric according to any one of (1) to (4), wherein an adhesive layer is present between the woven or knitted fabric and the moisture-permeable waterproof layer.
(6) The laminated fabric according to any one of (1) to (5), wherein a lining fiber fabric is laminated on the moisture-permeable waterproof layer.
(7) The laminated fabric according to any one of (1) to (6), wherein the water-droplet-moving angle of a surface of the woven or knitted fabric on a side opposite to the adhesive layer is 60 degrees or less.
(8) The laminated fabric according to any one of (1) to (7), wherein the resistance to water penetration is 100 kPa or more as measured in accordance with Method B specified in JIS L 1092: 2009.
(9) The laminated fabric according to any one of (1) to (8), wherein the water vapour permeability is 10000 g/m$^2$•24h or more as measured in accordance with Method B-1 specified in JIS L 1099: 2012.
(10) The laminated fabric according to any one of (1) to (9), wherein the peel strength between the woven or knitted fabric and the moisture-permeable waterproof layer is 5 N/2.54cm or more as measured in accordance with the method specified in JIS L 1089.
(11) A method for manufacturing the laminated fabric according to any one of (1) to (4) and (6) to (10), the method comprising the step of:

forming a moisture-permeable waterproof layer on one surface of a woven or knitted fabric by applying to the surface a resin for forming the moisture-permeable waterproof layer, wherein
the woven or knitted fabric contains an entangled combined-filament yarn including polyester fiber A having a monofilament fineness of 0.2 to 0.9 dtex and polyester fiber B having a monofilament fineness of 1.0 to 5.0 dtex,
the entangled combined-filament yarn is false-twist-crimped as a whole, and the mass ratio of the polyester fiber A and the polyester fiber B (A/B) is in a range of 20/80 to 80/20,
the entangled combined-filament yarn has protrusions made of polyester fiber A on a surface portion,
the woven or knitted fabric has a cover factor of 1800 to 2800, and
a water-repellent agent is adhered on a surface of the woven or knitted fabric on a side opposite to a surface to which the resin for forming the moisture-permeable waterproof layer is applied.

(12) A method for manufacturing the laminated fabric according to any one of (1) to (10), the method comprising the steps of:

forming an adhesive layer on a woven or knitted fabric or a moisture-permeable waterproof layer; and
bonding the woven or knitted fabric and the moisture-permeable waterproof layer to each other with the adhesive layer interposed therebetween, wherein
the woven or knitted fabric contains an entangled combined-filament yarn including polyester fiber A having a monofilament fineness of 0.2 to 0.9 dtex and polyester fiber B having a monofilament fineness of 1.0 to 5.0 dtex, the entangled combined-filament yarn is false-twist-crimped as a whole, and the mass ratio of the polyester fiber A and the polyester fiber B (A/B) is in a range of 20/80 to 80/20,
the entangled combined-filament yarn has protrusions made of polyester fiber A on a surface portion,
the woven or knitted fabric has a cover factor of 1800 to 2800, and
a water-repellent agent is adhered on a surface of the woven or knitted fabric on a side opposite to a surface that is in contact with the adhesive layer.

EFFECTS OF THE INVENTION

According to the present invention, a woven or knitted fabric is formed using an entangled combined-filament yarn having specific protrusions (thread loops or slack), and thus it is possible to provide a laminated fabric which has high tear strength along with excellent water repellency and moisture permeability and waterproofness and which is resistant to delamination between a woven or knitted fabric and a moisture-permeable waterproof layer.

BRIEF DESCRIPTION OF THE DRAWINGS

Fig. 1 is a schematic diagram for illustrating a method for manufacturing an entangled combined-filament yarn for forming a woven or knitted fabric contained in a laminated fabric of the present invention.
Fig. 2 is a schematic view for illustrating ripstop weave of a woven fabric used in each of examples and comparative examples.

EMBODIMENTS OF THE INVENTION

A laminated fabric of the present invention includes a moisture-permeable waterproof layer on one surface of a woven or knitted fabric having a specific configuration, and has a water-repellent agent adhered on the other surface of the woven or knitted fabric. Hereinafter, the present invention will be described in detail.

[Woven or knitted fabric]

The woven or knitted fabric to be used in the laminated fabric of the present invention includes a specific entangled combined-filament yarn, and develops water repellency by fine protrusions on a surface.

(Entangled combined-filament yarn)

The entangled combined-filament yarn includes polyester fiber A having a monofilament fineness of 0.2 to 0.9 dtex, and polyester fiber B having a monofilament fineness of 1.0 to 5.0 dtex. The fineness of polyester fiber A and the fineness of polyester fiber B are set within the above-mentioned specific ranges, respectively, to sufficiently intertwine polyester fiber A and polyester fiber B, and by the intertwinement, protrusions by relatively thin polyester fiber A are easily formed on a surface portion of the entangled combined-filament yarn. In the present invention, the protrusion by polyester fiber A is a portion where polyester fiber A is protruded outside by loops or slack of polyester fiber A on a surface portion of the entangled combined-filament yarn.
A surface structure of the entangled combined-filament yarn will be described. Fine protrusions on a surface portion of the entangled combined-filament yarn are formed by relatively thin polyester fiber A, and therefore when water droplets are placed on the protrusions, the water droplet tends not to penetrate the entangled combined-filament yarn. Therefore, on a surface of the woven or knitted fabric, a so-called Lotus effect is produced at the protrusions, so that excellent water-repellent performance can be exhibited. In addition, as described below, the entangled combined-filament yarn is made of two types of polyester fibers A and B each having a specific monofilament fineness combined in a specific mass ratio, and a surface portion of the entangled combined-filament yarn has a portion where relatively thin polyester fibers A are gently entangled. This portion with the entangled thin fiber forms a layer (air-holding layer) that tends to hold air. Through this portion with entangled polyester fiber A, the protrusion protrudes. More specifically, thin polyester fiber A is gently entangled and thereby forms this air-holding layer under the protrusion of polyester fiber A (namely, to the side of the entangled combined-filament yarn) and as a result, moisture tends not to penetrate the entangled combined-filament yarn. Further under the air-holding layer of the entangled combined-filament yarn, polyester fiber A and polyester fiber B are entangled to each other.

From the viewpoint of obtaining an entangled combined-filament yarn capable of imparting high water-repellent performance to the woven or knitted fabric, the monofilament fineness of polyester fiber A is set to preferably about 0.2 to 0.7 dtex, more preferably about 0.2 to 0.5 dtex. When the monofilament fineness of polyester fiber A is less than 0.2 dtex, the opening effect becomes insufficient because the fiber is excessively thin, and thus the effect of intertwinement with polyester fiber B is reduced, so that an interlacing failure easily occurs. On the other hand, when the monofilament fineness of polyester fiber A is more than 0.9 dtex, the fiber is too rigid to form an excellent combined filament with polyester fiber B, leading to a tendency toward poor entanglement. In addition, when polyester fiber A is thick, the contact area between the woven or knitted fabric and water droplet increases, and further, the fiber becomes rigid, so that the above-mentioned air-holding layer is difficult to form, and resultantly, it is difficult to obtain desired water-repellent performance.

In addition, when the monofilament fineness of polyester fiber B is less than 1.0 dtex, it is difficult to retain fine protrusions formed by polyester fiber A on a surface portion of the entangled combined-filament yarn, and thus the air-holding layer is difficult to form. When the monofilament fineness of polyester fiber A is equivalent to the monofilament fineness of polyester fiber B, the woven or knitted fabric is excessively soft in formation of the woven or knitted fabric from the entangled combined-filament yarn, so that the woven or knitted fabric is apt to have poor anti-drape stiffness and a bad shape. On the other hand, when the monofilament fineness of polyester fiber B is more than 5.0 dtex, the woven or knitted fabric has an excessively hard texture feeing as a whole. Further, entanglement is poor, and thus formation of fine protrusions on a surface of the woven or knitted fabric becomes difficult, so that it is difficult to impart high water-repellent performance to the surface of the woven or knitted fabric. From the viewpoint of ease of forming fine protrusions on a surface of the woven or knitted fabric, impartment of high water-repellent performance, and so on, the monofilament fineness of polyester fiber B is preferably about 1.5 to 4.5 dtex.

The entangled combined-filament yarn is false-twist-crimped as a whole, and the degree of the false-twist-crimp, i.e. the crimping rate is preferably about 10 to 55%, more preferably about 10 to 50%, still more preferably about 10 to 45%, most preferably about 20 to 40%. When the entangled combined-filament yarn has a moderate crimping rate, it is easy to form the above-mentioned fine protrusions on a surface portion of the entangled combined-filament yarn. When the crimping rate of the entangled combined-filament yarn is less than 10%, there may be a tendency that because the crimping rate is low, formation of the above-mentioned protrusions on a surface portion of the entangled combined-filament yarn is difficult, so that water-repellent performance cannot be sufficiently exhibited on the surface of the woven or knitted fabric. In addition, when the crimping rate of the entangled combined-filament yarn is more than 55%, there may be a tendency that stretching performance of the entangled combined-filament yarn is excessively high, so that the entangled combined-filament yarn has a flat structure when stretched, and therefore it is difficult to maintain the above-mentioned protrusions, leading to deterioration of water-repellent performance.

The crimping rate of the entangled combined-filament yarn is a value obtained by performing measurement in accordance with the following method. A sizing reel having a frame circumference length of 1.125 m is used to wind the entangled combined-filament yarn five rounds to form a skein. The resulting skein is hung free on a support at room temperature for a whole day and night. Then, the skein is placed in boiling water with a load of 0.000147 cN/dtex being applied thereto, followed by wet heat treatment for 30 minutes. The skein is then taken out of the boiling water and moisture is gently removed with a piece of filter paper, followed by being left free at room temperature for 30 minutes. Then, the skein is applied with a load of 0.000147 cN/dtex and 0.00177 cN/dtex (light load), followed by measurement of length X. Subsequently, the light load is replaced with a load (heavy load) of 0.044 cN/dtex while a load of 0.000147 cN/dtex is still being applied, and length Y is measured. Calculation follows using the following expression: crimping rate (%) = (Y - X)/Y × 100. This measurement of the crimping rate is carried out for five pieces of the entangled combined-filament yarn and the average value is regarded as the crimping rate of the entangled combined-filament yarn.

The mass ratio of polyester fiber A and polyester fiber B (A/B) is in a range of 20/80 to 80/20. When the mass ratio (mixing ratio) of polyester A is less than 20%, formation of the above-mentioned protrusions on a surface portion of the entangled combined-filament yarn is difficult because the ratio of polyester fiber A in the entangled combined-filament yarn is excessively low, so that it is difficult to impart high water-repellent performance to a surface of the woven or knitted fabric. On the other hand, when the mixing ratio of polyester fiber A is more than 80%, it is difficult to retain the above-mentioned protrusions on a surface of the woven or knitted fabric because the ratio of polyester fiber B is extremely low. Thus, fine protrusions are easily collapsed, so that it is difficult to impart high water-repellent performance to the woven or knitted fabric. The mass ratio of polyester fiber A and polyester fiber B (A/B) is preferably about 30/70 to 70/30.

The entangled combined-filament yarn is combined and entangled as a whole of the yarn. The number of entanglements of the entangled combined-filament yarn is preferably about 90 to 200 per meter. When the number of entanglements is less than 90 per meter, the entanglements come loose easily, thus it may be difficult to form the above-mentioned fine protrusions on a surface portion of the entangled combined-filament yarn. In addition, when the entanglements come loose easily, guide abrasion inevitably suffered in a process for manufacturing the woven or knitted fabric may cause mi sa 1 i gnment in the thread, thus it may be easy to induce defects in the woven or knitted fabric. On the other hand, when the number of entanglements is more than 200 per meter, polyester fiber A and polyester fiber B are excessively intertwined, so that crimps are eliminated, and the above-mentioned protrusions are hardly formed, thus making it difficult to impart high water-repellent performance to the woven or knitted fabric. The number of entanglements of the entangled combined-filament yarn is a value obtained by performing measurement in accordance with a hook method specified in JIS L1013 8.15.

As described above, the entangled combined-filament yarn to be used for the woven or knitted fabric has the following characteristics: (1) the monofilament fineness of each of two yarns: polyester fiber A and polyester fiber B is set within the above-described specific range; (2) the mixing ratio of the two yarns is set within the above-mentioned specific range; (3) the two yarns are combined; and (4) the entangled combined-filament yarn is false-twist-crimped as a whole. As a synergic effect of these configurations, fine protrusions made of polyester fiber A are formed on a surface portion of the entangled combined-filament yarn, and by the protrusions, high water-repellent performance can be imparted to the woven or knitted fabric using the entangled combined-filament yarn. Further, water-repellent performance is improved by the above-described air-holding layer.

At least one of polyester fiber A and polyester fiber B may contain appropriate additives (e.g. sunlight blocking substance, infrared absorbing substance and a dye) as long as the effect of the present invention is not impaired. Cation-dyeable polyester may be used as a constituent material of polyester fiber A and/or polyester fiber B as long as the effect of the present invention is not impaired. When cation-dyeable polyester is used for at least one of the constituent materials of polyester fiber A and polyester fiber B, dyeing can be performed with a cation dye during dyeing processing to impart a melange-toned texture, leading to development of a design property. In addition, when cation-dyeable polyester is used as a constituent material for both polyester fiber A and polyester fiber B, migration and sublimation can be prevented because it is not necessary to use a dispersion dye.

In general, thicker fiber is more rigid, and thinner fiber is more flexible. Taking advantage of such a property of fiber, polyester fiber A is protruded on a surface portion of the entangled combined-filament yarn by causing relatively thin polyester fiber A to enter large space generated between relatively thick polyester fibers B in a composite-false-twisting step and a combining-and-entangling step as described above. That is, in the entangled combined-filament yarn, the polyester fiber A and polyester fiber B for forming the entangled combined-filament yarn each have a monofilament fineness within the above-mentioned specific range, the mixing ratio of these two kinds of fibers is set within the above-mentioned specific range, and the entangled combined-filament yarn is false-twist-crimped as a whole to form a specific surface structure as described above, so that excellent water-repellent performance can be imparted to the woven or knitted fabric.

The total fineness of the entangled combined-filament yarn is not particularly limited, and is, for example, 50 to 350 dtex, preferably 50 to 300 dtex.

(Method for manufacturing entangled combined-filament yarn)

The method for manufacturing the above-mentioned entangled combined-filament yarn is not particularly limited, and examples thereof include a method including the following steps:

a drawing step of a highly-oriented undrawn polyester yarn B having a monofilament fineness of 1.5 to 6.5 dtex and a degree of elongation of 100 to 160% at a draw ratio of 1.1 to 2;
a composite-false-twisting step of composite-false-twisting a drawn polyester yarn B obtained in the drawing step and a highly-oriented undrawn polyester yarn A having a monofilament fineness of 0.4 to 1.3 dtex and a degree of elongation of 80 to 110% under the condition of a processing speed of 80 to 1000 m/min and a draw ratio of 1.10 to 1.50; and
a combining-and-entangling step of combining and entangling a composite-false-twisted yarn obtained in the composite-false-twisting step under the condition of an air pressure of 0.1 to 0.6 Mpa and an overfeed rate of 1 to 4% using a fluid nozzle.

For manufacturing the entangled combined-filament yarn, the drawing step of drawing the highly-oriented undrawn polyester yarn B (which is formed into polyester fiber B for forming the entangled combined-filament yarn) at a specific draw ratio in advance is carried out to obtain the drawn polyester yarn B. Accordingly, the highly-oriented undrawn polyester yarn A (which is formed into polyester fiber A for forming the entangled combined-filament yarn) and the drawn polyester yarn B have almost the same degree of elongation, or the drawn polyester yarn B has a slightly lower degree of elongation. A yarn having a higher degree of elongation has a larger yarn length in the subsequent composite-false-twisting step. Thereafter, the composite-false-twisting step of composite-false-twisting the drawn polyester yarn B obtained in the drawing step and the highly-oriented undrawn polyester yarn A as the other party in combined while parallelly arranging and drawing the yarns is carried out to obtain a composite-false-twisted yarn. In the composite-false-twisted yarn, a large amount of the highly-oriented undrawn polyester yarn A is disposed outside (on the surface side). Subsequently, the combining-and-entangling step of combining and entangling the composite-false-twisted yarn is carried out to obtain a entangled combined-filament yarn. In the entangled combined-filament yarn produced in this way, polyester fiber A is protruded on a surface portion of the entangled combined-filament yarn. By passing through the above-described steps, the highly-oriented undrawn polyester yarn A is formed into polyester fiber A for forming the entangled combined-filament yarn, and the highly-oriented undrawn polyester yarn B is formed into polyester fiber B for forming the entangled combined-filament yarn.

Here, the highly-oriented undrawn polyester yarn is a multifilament yarn obtained by, for example, spinning a polyester polymer at a speed of about 2000 to 4000 m/minute, and winding the resulting yarn. As the polyester polymer, polyethylene terephthalate, polybutylene terephthalate, polyethylene naphthalate and the like may be used singly, or used in combination of two or more thereof. In addition, the polyester polymer may be copolyester. If necessary, the polyester polymer contains modifiers such as a matting agent, a stabilizer, a flame retardant and a colorant. The highly-oriented undrawn polyester yarn is formed by bundling a plurality of highly-oriented undrawn fibers, and for example, when the fiber has a cross-section of concentric sheath-core type, it is preferable that both the core portion and the sheath portion have the same polyester polymer in consideration of compatibility of polymers disposed on the core portion and the sheath portion.

For example, it is preferable that the highly-oriented undrawn polyester yarn A has a monofilament fineness of 0.4 to 1.3 dtex and a degree of elongation of 80 to 110%. The monofilament fineness of the highly-oriented undrawn polyester yarn A is more preferably 0.4 to 1.0 dtex.

On the other hand, for example, it is preferable that the highly-oriented undrawn polyester yarn B has a monofilament fineness of 1.5 to 6.5 dtex and a degree of elongation of 100 to 160%, and it is more preferable that the highly-oriented undrawn polyester yarn B has a monofilament fineness of 1.7 to 6 dtex and a degree of elongation of 110 to 150%.

Here, the degree of elongation is a value determined in accordance with JIS L1013 8.5.1, and the specific measurement method is as follows.

A tensile tester with constant speed strain control (autograph "AGS-5KNG" manufactured by Shimadzu Corporation) is used and set at a sample length of 200 mm, to which an initial load (8.82 mN × (numerical value in tex)) is applied. A sample is attached to a grip of the tensile tester and then pulled at a strain speed of 200 mm/min. The elongation is calculated by the following mathematical expression. The average value of ten such measurements is calculated.

$$\text{Degree of elongation (\%)} = (\text{elongation at maximum tenacity (mm)})/(\text{sample length (mm)}) \times 100$$

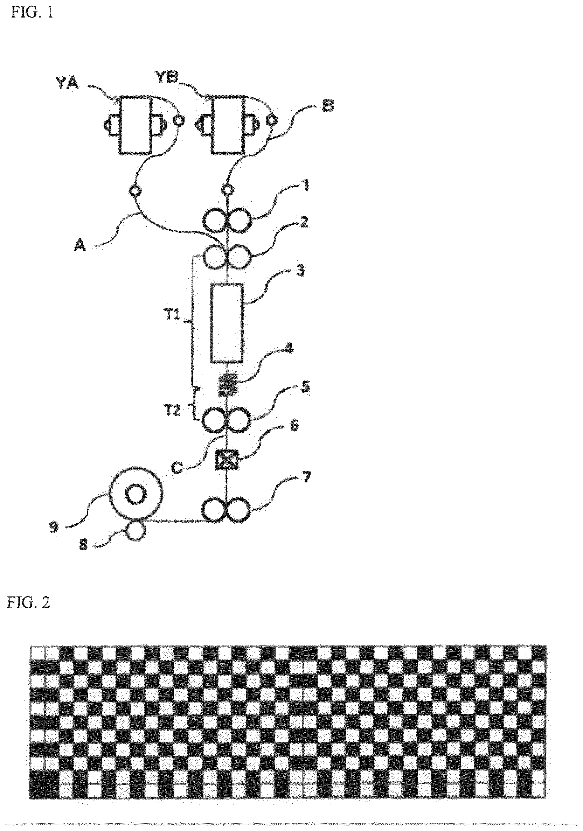

The method for manufacturing the entangled combined-filament yarn will now be described in detail with reference to the schematic drawing in Fig. 1. First, packages YA and YB of the highly-oriented undrawn polyester yarns A and B are each set on a creel. Next, the highly-oriented undrawn polyester yarn B is introduced to a feeding roller 1. A drawing step of drawing the highly-oriented undrawn polyester yarn B between the feeding roller 1 and a first take-up roller 2 is carried out.

In the drawing step, the draw ratio is preferably about 1.1 to 2, more preferably about 1.1 to 1.4. Accordingly, the highly-oriented undrawn polyester yarn A and the drawn polyester yarn B obtained by drawing the highly-oriented undrawn polyester yarn B have almost the same degree of elongation, or the highly-oriented undrawn polyester yarn A has a slightly higher degree of elongation. Here, the draw ratio in the drawing step is a ratio of the surface speed of the feeding roller 1 and the surface speed of the first take-up roller 2 (draw ratio = surface speed of first take-up roller 2 / surface speed of feeding roller 1). A yarn having a higher degree of elongation has a larger yarn length in the subsequent composite-false-twisting step, and fiber having a large yarn length is easily disposed outside the entangled combined-filament yarn (on the surface side) later. As a result, protrusions by polyester fiber A are easily formed on the surface of the entangled combined-filament yarn as described above. In addition, the protrusions are protruded only from portions where polyester fibers A formed on the surface portion of the entangled combined-filament yarn are loosely intertwined. By drawing the highly-oriented undrawn polyester yarn B, the monofilament fineness thereof can be finely adjusted to more preferred one, and the mixing ratio of the highly-oriented undrawn polyester yarn A and the drawn polyester yarn B can be adjusted to more preferred one. Drawing of the highly-oriented undrawn polyester yarn B may be performed at room temperature, or while heat is applied by installation of a heater or the like.

Next, a composite-false-twisting step of composite-false-twisting the drawn polyester yarn B after drawing and the highly-oriented undrawn polyester yarn A under a predetermined condition is carried out. That is, the drawn polyester yarn B drawn in the drawing step and the highly-oriented undrawn polyester yarn A having a monofilament fineness of 0.4 to 1.3 dtex and a degree of elongation of 80 to 110% are composite-false-twisted under the condition of a processing speed of 80 to 1000 m/min and a draw ratio of 1.10 to 1.5. Specifically, as shown in Fig. 1, the drawn polyester yarn B drawn as described above, and the highly-oriented undrawn polyester yarn A are simultaneously introduced to the first take-up roller 2, fed through a heater 3 and a false-twisting apparatus 4, and drawn out from a second take-up roller 5 to obtain a composite-false-twisted yarn C. Here, a gap between the first take-up roller 2 and the second take-up roller 5 in Fig. 1 forms a composite-false-twisting area. Specifically, the area between the first take-up roller 2 and the false-twisting apparatus 4 forms twisting area T1, and the area between the false-twisting apparatus 4 and the second take-up roller 5 forms loosening area T2.

Preferably, the processing speed and the draw ratio are each specified in the composite-false-twisting step. The processing speed is a yarn speed at the time of drawing out the yarn from the second take-up roller 5, i.e. a surface speed of the second take-up roller 5. The processing speed (yarn speed) is preferably about 80 to 1000 m/minute as described above, more preferably about 100 to 700 m/minute. When the yarn speed is below the above-mentioned range, a composite-false-twisted yarn C tends to be excessively heavily crimped. When the yarn is heavily crimped, high stretching performance is developed, thus being unsuitable for manufacturing of a woven or knitted fabric having high water repellency. In addition, when stretching performance of the composite-false-twisted yarn C is high, stretching performance of the resulting entangled combined-filament yarn is also high, so that the entangled combined-filament yarn is easily extended. When the entangled combined-filament yarn is extended, the entangled combined-filament yarn has a flat shape, and the above-mentioned fine protrusions on the surface of the entangled combined-filament yarn are eliminated. Thus, when the yarn speed is below the above-mentioned range, so that the yarn is heavily crimped, it is difficult to impart desired water-repellent performance to the woven or knitted fabric. On the other hand, when the yarn speed is above the above-mentioned range, the composite-false-twisted yarn C tends to be loosely crimped. When the yarn is loosely crimped, a sufficient crimp is not imparted to polyester fiber, and thus the polyester fiber has a shape close to a flat shape. Therefore, it is difficult for polyester fiber A to form protrusions on a surface portion of the entangled combined-filament yarn, so that desired water-repellent performance is hardly imparted to the woven or knitted fabric.

In the composite-false-twisting step, the draw ratio is preferably in a range of about 1.10 to 1.50, more preferably in a range of about 1.10 to 1.30. The draw ratio in the composite-false-twisting step is a ratio of the surface speed of the first take-up roller 2 and the surface speed of the second take-up roller 5 (draw ratio = surface speed of second take-up roller 5 / surface speed of first take-up roller 2).

In the composite-false-twisting step, the drawn polyester yarn B after drawing and the highly-oriented undrawn polyester yarn A are composite-false-twisted preferably at a predetermined processing speed and predetermined draw ratio by an appropriate false-twisting apparatus. The method of false-twisting is generally classified broadly into a spindle method and a friction method, but any of these methods may be employed. False-twisting conditions, a heater temperature and a heating degree can be appropriately set.

After the composite-false-twisting step, the composite-false-twisted yarn C is led to the fluid nozzle 6 by the second take-up roller 5, and combined and entangled using the fluid nozzle 6. The fluid nozzle is not particularly limited, but an interlacing nozzle is generally preferable.

As conditions for combining and entangling, the air pressure is set to preferably about 0.1 to 0.6 Mpa, and the overfeed rate is set to preferably about 1 to 4% as described above. The overfeed rate is calculated from the expression: overfeed rate = (VI - V2) / V2 $\times$ 100 (%) where V1 is a yarn speed just before introduction into the fluid nozzle, and V2 is a yarn speed just after passage through the fluid nozzle. In Fig. 1, the overfeed rate is calculated from the expression: overfeed rate = (surface speed of second take-up roller 5 - surface speed of third take-up roller 7) / surface speed of third take-up roller 7 $\times$ 100 (%). Since a large amount of polyester fiber A is disposed outside the composite-false-twisted yarn C, the fiber is combined and entangled under a predetermined condition to form the air-holding layer with protrusions formed by polyester fiber A.

The entangled combined-filament yarn is wound around a package 9 by a winding roller 8 after passing over the third take-up roller 7. It can be said that the entangled combined-filament yarn is moderately combined and interfaced when the number of entanglements is in a range of about 90 to 200 per meter as a guide. In addition, besides the number of entanglements, it is preferable that the crimp change ratio falls within a predetermined range as a guide of being moderately combined and entangled. That is, when the yarn is combined and entangled, the crimping rate of the overall yarn decreases because fibers are intertwined, and a guide of being moderately combined and entangled can be known by recognizing the degree to which the crimping rate has decreased. The crimp change ratio is preferably in a range of 40 to 70%.

The crimp change ratio is calculated from the expression: crimp change ratio =

(crimping rate of resulting entangled combined-filament yarn) / (crimping rate of

composite-false-twisted yarn C) × 100 (%).

When the crimp change ratio is less than 40%, the entanglements are intensified, and the fine protrusions are hardly obtained, so that it is difficult to impart high water-repellent performance to the woven or knitted fabric. In addition, when the crimp change ratio is more than 70%, the entanglements come loose easily, so that misalignment occurs in the thread, or fine protrusions are hardly obtained.

The entangled combined-filament yarn for use in the present invention may be produced in accordance with the above-mentioned manufacturing method, or may be a commercially available product when it can be obtained as a commercially available product. In addition, when the drawn polyester yarn B can be obtained as a commercially available product, the entangled combined-filament yarn for use in the present invention can also be obtained by carrying out the composite-false-twisting step and the combining-and-entangling step using the commercially available drawn polyester yarn B and the highly-oriented undrawn polyester yarn A without carrying out the drawing step.

[Structure of woven or knitted fabric]

Since protrusions of polyester fiber A are formed on a surface portion of the entangled combined-filament yarn, protrusions of the entangled combined-filament yarn are situated on a surface portion in the woven or knitted fabric for use in the present invention. Therefore, in the woven or knitted fabric for use in the present invention, the protrusions can support not only large water droplets but also small water droplets, and movement of water droplets into the woven or knitted fabric can be suppressed due to presence of the air-holding layer, so that water-repellent performance equivalent to a so-called Lotus effect is remarkably improved.

In the present invention, the entangled combined-filament yarn may be used for at least a part of warp and/or weft for forming the woven or knitted fabric, but from the viewpoint of effectively suppressing delamination between the woven or knitted fabric and the moisture-permeable waterproof layer while imparting excellent water repellency and waterproofness, the use amount of the entangled combined-filament yarn in the woven or knitted fabric is 30 to 100% by mass, preferably 40 to 100% by mass, more preferably 45 to 100% by mass.

In the woven or knitted fabric for use in the present invention, a water-repellent agent is adhered on a surface on a side opposite to a surface provided with the adhesive layer. On the water-repellent agent-adhered surface, remarkably excellent water repellency is exhibited in cooperation with the protrusions on a surface of the woven or knitted fabric, and excellent water-repellent performance can be exhibited even by using a previously known inexpensive fluorine-based water-repellent agent etc.

The water-repellent agent for use in the present invention is not particularly limited, but a fluorine-based water-repellent agent is preferred from the viewpoint of workability, cost, and so on. Specifically, a fluorine-based water-repellent agent composed of a fluorine-based compound having a polyfluoroalkyl group (Rf group) in the chemical structure is preferred. The Rf group is a group in which two or more hydrogen groups of an alkyl group are substituted with fluorine atoms. The number of carbons of the Rf group is preferably 2 to 20, more preferably 2 to 8, still more preferably 1 to 6. The Rf group may have a linear-chain structure or a branched-chain structure. Particularly when the Rf group has a branched-chain structure, the branched-chain part is present at an end part of the Rf group, and is preferably a short chain having about 1 to 8 carbon atoms, more preferably 1 to 6 carbon atoms. The Rf group is preferably a group in which all hydrogen atoms of an alkyl group are substituted with fluorine atoms (perfluoroalkyl group).

As the fluorine-based compound, a copolymer obtained by polymerizing a polymer containing the perfluoroalkyl group and other polymerizable monomer by a known method is preferable. Examples of the other polymerizable monomer include acrylic acid, methacrylic acid, styrene and vinyl chloride. In addition, an acryl-based compound, a vinyl acetate-based compound, a melamine-based compound or the like may be appropriately mixed as necessary.

A commercially available product can be used as the fluorine-based water-repellent agent, and examples thereof include "AsahiGuard (trade name)" manufactured by Asahi Glass Co., Ltd., and "NK GUARD (trade name)" manufactured by NICCA CHEMICAL CO., LTD. As the fluorine-based water-repellent agent, in particular, a fluorine-based water-repellent agent free from a perfluoroalkylcarboxylic acid is preferred from the viewpoint of environmental protection. Preferably, the fluorine-based water-repellent agent is used in the form of an aqueous emulsion.

In addition, a water-repellent agent free from fluorine may be used from the viewpoint of environmental consideration. Examples of the non-fluorine-based water-repellent agent include hydrocarbon-based water-repellent agents, silicone-based water-repellent agents and wax-based water-repellent agents. A commercially available product can be used as the non-fluorine-based water-repellent agent, and examples thereof include "NEOSEED" (trade name)" manufactured by NICCA CHEMICAL CO., LTD., PARADIUM ECO (trade name)" manufactured by OHARA PARADIUM CHEMICAL CO., LTD. and so on as hydrocarbon-based water-repellent agents; "DRYPON 600E (trade name)" manufactured by NICCA CHEMICAL CO., LTD., "POLON (trade name)" manufactured by Shin-Etsu Chemical Co., Ltd. and so on as silicone-based water-repellent agents; and "TH-44 (trade name" manufactured by NICCA CHEMICAL CO., LTD., "NEOLAX (trade name)" manufactured by TAKAMATSU OIL & FAT CO., LTD. and so on as wax-based water-repellent agents. In particular, a hydrocarbon-based water-repellent agent having high washing durability is preferred.

The amount of the water-repellent agent adhered on the woven or knitted fabric may be appropriately set according to the type of water-repellent agent to be used, the degree of intended water repellency or the like, and is, for example, 0.05 to 10 g/m$^2$, preferably 0.1 to 7 g/m$^2$ in terms of a content of the solid contained in the water-repellent agent.

The cover factor (CF) of the woven or knitted fabric for use in the present invention is 1800 to 2800. When the cover factor (CF) falls within this range, it is possible to impart excellent water-repellent performance and high tear strength to the laminated fabric. The cover factor (CF) of the woven or knitted fabric for use in the present invention is preferably 2000 to 2800. When the cover factor (CF) is less than 1800, the resulting woven or knitted fabric has rough intersections and has an increased amount of space. As a result, a water droplet tends to fall into the space and therefore improvement in water repellency cannot be expected. In addition, resin forming the moisture-permeable waterproof layer, an adhesive or the like enters the space of the woven or knitted fabric, and is hardened, so that the woven or knitted fabric has a hard texture feeling, and poor strength (tear strength). On the other hand, when the cover factor (CF) is more than 2800, fine protrusions on a surface portion of the entangled combined-filament yarn tends to be eliminated because restraint attributed to intersections is strong, and improvement of water-repellent performance cannot be expected.

The cover factor (CF) of the woven or knitted fabric refers to a numerical value of the roughness or fineness thereof, and is calculated from the following expression.

$$CF = D^{1/2} \times \text{warp density (the number of yarns/2.54 cm)} + E^{1/2} \times \text{weft density (the number of yarns/2.54cm)}$$

where D represents a total fineness of warp, and E represents a total fineness of weft.

The type of weave or knitting of the water-repellent woven or knitted fabric of the present invention is not particularly limited, and for example, a plain weave, a twill weave or a stain weave can be employed. When strength, a thick texture feeling or the like is desired, for example, a multilayer weave or a ripstop weave may be employed.

The water-droplet-moving angle of a surface of the woven or knitted fabric on a side opposite to a surface to which the moisture-permeable waterproof layer is laminated is preferably 60 degrees or less, more preferably 50 degrees or less, still more preferably 40 degrees or less. The lower limit of the water-droplet-moving angle is preferably as low as possible, and more than 0, and is, for example, about 5 degrees. The water-droplet-moving angle is an index for evaluating superiority or inferiority in water-repellent performance like a Lotus effect. 0.2 mL of water is gently dropped to a surface of a woven or knitted fabric of a horizontal sample attached on a horizontal plate, and the horizontal plate is gently tilted. The angle of the horizontal plate at which the water droplet starts to roll down is the water-droplet-moving angle. When the water-droplet-moving angle is more than 60 degrees, it may be difficult to shake off water droplets of rainwater etc. without collapsing the water droplet shape when the woven or knitted fabric is actually sewed into a product. For example, when the woven or knitted fabric contains 50% by mass or more of the entangled combined-filament yarn maintaining protrusions and an air-holding layer as described above, or the cover factor (CF) is set within the above-mentioned range, the water-droplet-moving angle can be easily set to 60 degrees or less. Preferably, the water-droplet-moving angle falls within the above-mentioned range in both the longitudinal direction and the lateral direction.

[Moisture-permeable waterproof layer]

In the laminated fabric of the present invention, a moisture-permeable waterproof layer for imparting waterproofness and moisture permeability is laminated on the woven or knitted fabric. The moisture-permeable waterproof layer is a layer which covers one surface of the woven or knitted fabric, and is formed of a resin having waterproofness and moisture permeability.

The moisture-permeable waterproof layer may be formed by applying a resin (resin for forming the moisture-permeable waterproof layer) directly to the woven or knitted fabric, or may be laminated on one surface of the woven or knitted fabric with the later-described adhesive layer interposed therebetween. In the present invention, a fabric having fine protrusions resulting from loops or slack on a surface is employed as the woven or knitted fabric. Thus, the protrusions are firmly intertwined with the adhesive layer or the moisture-permeable waterproof layer to develop an anchor effect, and therefore the woven or knitted fabric and the moisture-permeable waterproof layer are further hardly peeled from each other. When a normal woven or knitted fabric (woven or knitted fabric which does not sufficiently maintain the protrusions on a surface) is used, there is the possibility that an anchor effect is not sufficiently developed, and in this case, the woven or knitted fabric and the moisture-permeable waterproof layer tend to be easily peeled from each other.

The resin for forming the moisture-permeable waterproof layer is not particularly limited, but it is preferable that moisture-permeable waterproof layer is formed of a polyurethane resin as a main component, and for example, it is preferable that a polyurethane resin is contained at a ratio of 80% by mass or more. A polyurethane resin is generally suitable for formation of a resin layer having moisture permeability and waterproofness. In particular, a microporous type is preferable when consideration is given to moisture permeability, but nonporous-type moisture-permeable urethane may be used rather than a microporous type when the fabric may be exposed to rainfall for a long period of time, or may be repeatedly used with the aid of washing etc.

A previously known polyurethane resin obtained by reacting a polyisocyanate component with a polyol component can be employed.

The moisture-permeable waterproof layer may have a microporous structure, or a nonporous structure. In addition, when having a microporous structure, the moisture-permeable waterproof layer may contain inorganic fine powder for securing desired moisture permeability.

Examples of the inorganic fine powder include fine powder composed of silicon dioxide, aluminum dioxide or titanium dioxide. In addition, the average primary particle size of the inorganic fine powder is preferably about 7 to 40 nm. The content of the inorganic fine powder is preferably 3 to 50% by mass, preferably 5 to 50% by mass based on the total amount of the moisture-permeable waterproof layer.

The thickness of the moisture-permeable waterproof layer is preferably 5 $\mu$m or more, more preferably 10 to 30 $\mu$m, still more preferably 10 to 25 $\mu$m. When the thickness is in the above-mentioned range, the fabric is excellent in balance between waterproofness and moisture permeability, and advantageous in terms of a texture feeling and tear strength.

[Adhesive layer]

Preferably, the laminated fabric of the present invention includes an adhesive layer. That is, it is preferable that the woven or knitted fabric and the moisture-permeable waterproof layer are laminated with the adhesive layer interposed therebetween. The reason for this will be described below. In the present invention, a fabric having fine protrusions resulting from loops or slack on a surface as described above is employed as the woven or knitted fabric. Thus, the protrusions are firmly intertwined with the adhesive layer to develop an anchor effect, and therefore the woven or knitted fabric and the moisture-permeable waterproof layer are further hardly peeled from each other.

In addition, when the moisture-permeable waterproof layer is laminated directly to the woven or knitted fabric by, for example, a coating method, there may be a case where protrusions on a surface of the woven or knitted fabric breaks through the moisture-permeable waterproof layer , and as a result, pinholes are formed, leading to poor water resistance and strength. In addition, the moisture-permeable waterproof layer may have an uneven thickness because coating is not uniform. When the surface of the woven or knitted fabric is smoothened by, for example, calender processing in order to the above-mentioned situation, the protrusions or the air-holding layer may be reduced, leading to deterioration of water repellency. Therefore, in the present invention, it is preferable that the woven or knitted fabric and the moisture-permeable waterproof layer are laminated with the adhesive layer interposed therebetween for achieving an excellent balance of water repellency, strength and water resistance.

The type of adhesive for forming the adhesive layer is not particularly limited, but an adhesive excellent in compatibility with the moisture-permeable waterproof layer is preferable, and examples thereof include polyurethane-based adhesives and olefin-based adhesives. For example, a resin containing a polyurethane resin as a main component is selected as the resin for forming the moisture-permeable waterproof layer, it is preferable to employ an adhesive layer composed of a polyurethane-based adhesive. A polyurethane-based adhesive having a structure of any of ether type, ester-type and polycarbonate type, but from the viewpoint of imparting excellent adhesiveness, a structure of ether type is preferable.

The adhesive layer may be formed over the whole of one surface of the woven or knitted fabric, or formed in a pattern shape from the viewpoint of moisture permeability, a texture feeling or the like. The form of the pattern shape is not particularly limited, examples thereof include dot patterns, line patterns, grid patterns, plaid patterns and hexagonal patterns, and in any case, it is preferable that the pattern is generally uniformly arranged.

The coating area of the adhesive layer is not particularly limited as long as the woven or knitted fabric and the moisture-permeable waterproof layer can be bonded to each other, and the coating area is, for example, 30% or more, preferably 40 to 80% from the viewpoint of not only securing moisture permeability but also suppressing delamination. When the coating area of the adhesive layer is markedly low, moisture permeability tends to be improved while peelability is reduced. On the other hand, when the coating area of the adhesive layer is markedly high, moisture permeability tends to be reduced while peelability is improved. It is preferable that the coating area of the adhesive layer is in the above-mentioned range from the viewpoint of a balance between peelability and moisture permeability.

The thickness of the adhesive layer is preferably about 5 to 100 $\mu$m, more preferably 10 to 80 $\mu$m, still more preferably 15 to 50 $\mu$m. When the thickness is less than 5 $\mu$m, it is difficult to obtain a laminated fabric having durability even when the occupied area of the adhesive is increased, and when the thickness is more than 100 $\mu$m, production cost increases, and it tends to be impossible to expect further improvement of adhesiveness. Thus, neither a thickness of less than 5 $\mu$m nor a thickness of more than 100 $\mu$m is preferable.

[Lining fiber fabric]

In the laminated fabric of the present invention, a lining fiber fabric may be laminated on the moisture-permeable waterproof layer (i.e. a surface of the moisture-permeable waterproof layer on a side opposite to a surface on which the woven or knitted fabric is laminated). The moisture-permeable waterproof layer can be protected by the lining fiber fabric, so that waterproofness (resistance to water penetration) and strength can be further improved. In addition, by laminating the lining fiber fabric, extension of the overall laminated fabric can be suppressed, and therefore reduction of protrusions of the combined composite yarn as a result of drawing the protrusions due to extension of the woven or knitted fabric by tension etc. in a finishing step after lamination or during wearing can be suppressed, so that the water repellency can be kept higher. In addition, lamination of the lining fiber fabric further improves water repellency. The reason for this is not evident, but the present inventors suppose that the number of lamination steps increases, and thereby the number of heat histories that the water-repellent agent undergoes increases, so that water repellency is further improved.

Examples of the lining fiber fabric include various woven fabrics and knitted fabrics. Among them, knitted fabrics are preferable because they allow constituent threads to more easily protrude to the surface as compared to woven fabrics, are not brought into a flat surface state, more reliably exhibit an anchor effect, and are hardly peeled from the moisture-permeable waterproof layer. Among them, tricot knitted fabrics are preferable because they have reduced elasticity as compared to knitted fabrics having other textures, therefore do not have excessively large knitted stitch gaps, and are excellent in water repellency. In addition, tricot knitted fabrics are preferable because they make it possible to obtain long gray fabric during knitting, has a reduced number of joints, and can be uniformly laminated on the moisture-permeable waterproof layer.

The material of fiber for forming the lining fiber fabric is not particularly limited, and can be appropriately selected, but is preferably nylon fiber. This is because an acidic dye is commonly used in nylon fiber, and therefore migration and sublimation of a dispersion dye to the moisture-permeable waterproof layer, which is a problem in polyester fiber using the dispersion dye, hardly occurs. The form of constituent fiber of the lining fiber fabric (filament, staple fiber or spun yarn), or the fineness of the lining fiber fabric is not particularly limited, and can be appropriately selected within the bounds of not impairing the effect of the present invention.

In the laminated fabric of the present invention, the lining fiber fabric may be laminated to the moisture-permeable waterproof layer directly or with the adhesive layer interposed therebetween. When the lining fiber fabric and the moisture-permeable waterproof layer are laminated with the adhesive layer interposed therebetween, the composition, thickness and the like of the adhesive layer are not particularly limited, and are the same as the composition, thickness and the like of, for example, an adhesive layer interposed between the woven or knitted fabric and the moisture-permeable waterproof layer.

[Properties of laminated fabric]

In the laminated fabric of the present invention, the resistance to water penetration measured in accordance with Method B specified in JIS L 1092: 2009 is preferably 100 Kpa or more, more preferably 150 Kpa or more from the viewpoint of waterproofness. More specifically, as one aspect of the laminated fabric of the present invention, the resistance to water penetration measured in accordance with Method B specified in JIS L 1092: 2009 is preferably 100 to 500 Kpa, more preferably 150 to 400 Kpa, still more preferably 150 to 300 Kpa.

In the laminated fabric of the present invention, the water vapor permeability measured in accordance with Method B-1 (potassium acetate method) specified in JIS L 1099: 2012 is preferably 10000 g/m$^2$•24h or more for excellent moisture permeability, and more preferably 15000 g/m$^2$•24h or more, still more preferably 20000 g/m$^2$•24h or more from the viewpoint of comfortability in use of the laminated fabric as a clothing material. More specifically, as one aspect of the laminated fabric of the present invention, the water vapor permeability measured in accordance with Method B-1 (potassium acetate method) specified in JIS L 1099: 2012 is preferably 10000 to 40000 g/m$^2$•24h, more preferably 20000 to 30000 g/m$^2$•24h.

In the laminated fabric of the present invention, the peel strength between the woven or knitted fabric and the moisture-permeable waterproof layer, which is measured in accordance with the method specified in JIS L 1089, is 5 N/2.54 cm or more, more preferably in a range of 6 to 30 N/2.54 cm, still more preferably in a range of 9 to 25 N/2.54 cm for suppression of delamination between the woven or knitted fabric and the moisture-permeable waterproof layer. For the peel strength to fall within the above-mentioned range, for example, a woven or knitted fabric, which is not subjected to excessively heavy calender processing, and sufficiently maintains protrusions, can be employed, or an adhesive layer can be provided.

In the laminated fabric of the present invention, the tear strength measured in accordance with Method A-1 specified in JIS L 1096: 2010is preferably 10 N or more for securing high tear strength.

[Method for manufacturing laminated fabric]

The method for manufacturing a laminated fabric according to the present invention will be described below.

In a first manufacturing method according to the present invention, a resin for forming the moisture-permeable waterproof layer is applied to a surface of a woven or knitted fabric to form the moisture-permeable waterproof layer.

A second manufacturing method according to the present invention includes the steps of: forming an adhesive layer on a woven or knitted fabric or a moisture-permeable waterproof layer; and laminating the woven or knitted fabric and the moisture-permeable waterproof layer with the adhesive layer interposed therebetween.

A method for obtaining a woven or knitted fabric will be described below. The woven or knitted fabric can be obtained by weaving and knitting the entangled combined-filament yarn to obtain a gray fabric, and subjecting the gray fabric to post processing and water-repellent processing. The weaving or knitting may be performed using a known weaving machine and knitting machine, and for a preparation step prior to the weaving and knitting, known equipment may be used.

In the post processing, first the gray fabric is scoured and relaxed. The scouring and relaxing can be performed, for example, in a continuous process or batch process at a temperature of 80 to 130°C. After the scouring and relaxing is performed, the woven or knitted fabric is preset. For presetting the woven or knitted fabric, drying and heating treatment is performed at 170 to 200°C for 30 to 120 seconds using a pin stenter. After being preset, the fabric is dyed in accordance with a conventional method, and then final-set as necessary.

Water-repellent processing is performed after post processing. One example of the water-repellent processing will be described below. First, an aqueous solution containing a water-repellent agent is prepared. Next, to the woven or knitted fabric subjected to post processing, the aqueous solution may be applied by, for example, a padding method, a spraying method, a kiss roll coater method or a slit coater method, and subjected to drying and heating treatment at 105 to 190°C for 30 to 150 seconds. The aqueous solution may also contain a crosslinking agent, a softener or an antistatic agent as necessary.

Here, it is preferable that protrusions on the fabric surface of the woven or knitted fabric are maintained as much as possible. For example, when the woven or knitted fabric is subjected to calender processing or the like for facilitating coating processing, there may be a case where the above-mentioned fine protrusions are collapsed, and thus the surface is flattened, so that a specific water-droplet-moving angle cannot be achieved. Further, there may be a case where the air-holding layer cannot be sufficiently maintain, and thus desired water repellency cannot be achieved. When the moisture-permeable waterproof layer is provided by a coating method, by performing calender processing, generation of pinholes, which are caused by protrusions, can be suppressed, so that the resistance to water penetration can be further improved. Therefore, it is preferable to sufficiently examine conditions for calender processing etc., and it is preferable that the woven or knitted fabric is subjected to processing which makes it possible to appropriately maintain protrusions, such as calender processing.

In the first manufacturing method, a coating method can be used for applying a resin for forming the moisture-permeable waterproof layer to a surface of the woven or knitted fabric to form the moisture-permeable waterproof layer. In the coating method, a knife coater or a comma coater can be used. In addition, from the viewpoint of a moisture permeability, it is preferable to obtain the moisture-permeable waterproof layer by a wet method.

In the second manufacturing method, for example, a lamination method can be used for carrying out the step of forming an adhesive layer on the woven or knitted fabric or the moisture-permeable waterproof layer.

In the lamination method, a method using a resin solution, or a hotmelt method can be employed for formation of the adhesive layer. First, on a surface of a release material (release paper, release fabric, release film, or so on), the moisture-permeable waterproof layer is formed by applying a moisture-permeable waterproof layer forming resin composition (e.g. a resin composition containing a resin for forming the moisture-permeable waterproof layer, and an organic solvent) while providing a clearance and adjusting the thickness, and heat treatment is performed, so that reaction is completed to obtain a film. The release material can be appropriately removed after bonding or aging.

An adhesive layer is formed on the woven or knitted fabric or the moisture-permeable waterproof layer. For example, in the case of a method using a resin solution, a two-component curable polyurethane resin solution adjusted to have a viscosity of 500 to 5000 mPa•s is applied over the entire surface or in a pattern shape. Thereafter, drying is performed to form an adhesive layer, and the woven or knitted fabric and the moisture-permeable waterproof layer are bonded to each other, and subjected to pressing or thermocompression bonding, so that the second manufacturing method can be carried out.

On the other hand, in the case of a hotmelt method, use of a moisture-curable resin which reacts with moisture in air is preferred, and in practical use, a resin which is melted over a temperature range of about 80 to 150°C. Here, first a hotmelt resin is melted with consideration given to the melting point of the resin and viscosity of the resin at melting. Thereafter, the molten resin is applied onto the woven or knitted fabric or the moisture-permeable waterproof layer, cooled at normal temperature, and simultaneously aged to form an adhesive layer. Thereafter, the woven or knitted fabric and the moisture-permeable waterproof layer are bonded to each other with the adhesive layer interposed therebetween, and subjected to compression bonding, so that the second manufacturing method can be carried out.

In the manufacturing method of the present invention, it is preferable to employ the second manufacturing method. This is because when the moisture-permeable waterproof layer is laminated using a coating method, fine protrusions on a surface of the woven or knitted fabric may cause generation of pinholes in the moisture-permeable waterproof layer, so that the resistance to water penetration tends to decrease. In addition, when the woven or knitted fabric is subjected to calender processing in order to form a uniform moisture-permeable waterproof layer, it may be impossible to achieve desired water repellency due to reduction of the protrusions or air-holding layer, and additional close examination of calender conditions is required, so that the process itself may be complicated.

Thereafter, a lining fiber fabric can be laminated on the moisture-permeable waterproof layer using an appropriate known method.

The laminated fabric of the present invention is excellent in water repellency and moisture permeability and waterproofness, and does not suffer from peeling of the moisture-permeable waterproof layer even under a harsh environment, and therefore the laminated fabric is suitably used in the fields of uniform clothing, sports clothing and outdoor products which are used outdoors. When the laminated fabric of the present invention is used for clothing applications, it is preferable that the laminated fabric is configured so as to expose the woven or knitted fabric side to rainwater etc.

EXAMPLES

Hereinafter, the present invention will be described in detail on the basis of examples. The present invention is not limited to these examples.

[Measurement method and evaluation method]

In examples and comparable examples, "1. monofilament fineness and total fineness", "2. crimping rate", "3. the number of entanglements of entangled combined-filament yarn", "4. yarn length difference of composite-false-twisted yarn", "5. water-repellent performance (water-droplet-moving angle) of surface of woven or knitted fabric", "6. resistance to water penetration (waterproofness)", "7. water vapor permeability", "8. peel strength" and "9. tear strength" were measured and evaluated by the following methods.

1. Monofilament fineness and total fineness

The monofilament fineness and total fineness of each of polyester fiber A and polyester fiber B in the entangled combined-filament yarn, and the monofilament fineness and total fineness of the entangled combined-filament yarn were measured according to the method specified in JIS L1013 8.3.1. A specific measurement method is as follows.

A sample was wound into a small skein using a sizing reel with a frame circumference length of 1.125 m or a rewinder with equivalent performance under a load of 2.94 mN $\times$ (numerical value in tex) at a speed of 120 times/minute. The mass of the resulting small skein having a yarn length of 900 m was measured for determining the apparent fineness thereof. The resulting apparent fineness was used together with an equilibrium moisture regain that had been separately measured, and thus a fineness (tex) based on corrected mass was calculated by an expression described below. The average value of five such measurements was rounded off to one decimal digit. To obtain the value of fineness in dtex, the fineness in tex needs to be divided by 10 (1 tex = 10 dtex).

[Expression 1]

$$F_0 = D' \times \frac{100 + R_0}{100 + R_e}$$

Wherein $F_D$: fineness (tex) based on corrected mass

D': apparent fineness (tex)
$R_O$: official regain (%) specified in JIS L0105 4.1 (official regain)
$R_e$: equilibrium moisture regain (%)

Ro (official regain) in the expression was 0.4%, which is an official regain of a polyester-based synthetic fiber.

The value $R_e$ (equilibrium moisture regain) in the expression was obtained by taking about 5 g from a sample at the moisture equilibrium, measuring the mass and the absolute dry mass, calculating the equilibrium moisture regain (%) by an expression described below, and rounding off the average value of two such measurements to one decimal digit. The moisture equilibrium refers to the following state: when the mass was measured in a test room in a standard state (the standard state refers to a temperature of 20 ± 2°C and a relative humidity of 65 ± 4%) at an interval of 1 hour or longer, the difference between the mass measured before a certain interval and the mass measured after the certain interval reached 0.1% or smaller the mass measured after the certain interval.

[Expression 2]

$$R_e = \frac{m - m'}{m'} \times 100$$

Wherein $R_e$: equilibrium moisture regain (%)
m: mass (g) of sample when it was taken
m': absolute dry mass (g) of sample

2. Crimping rate

The woven or knitted fabric was raveled to collect an entangled combined-filament yarn as a sample. Then, a sizing reel having a frame circumference length of 1.125 m was used to wind the entangled combined-filament yarn five rounds to form a skein. The resulting skein was hung free on a support at room temperature for a whole day and night. Then, the skein was placed in boiling water with a load of 0.000147 cN/dtex being applied thereto, followed by wet heat treatment for 30 minutes. The skein was then taken out of the boiling water and moisture was gently removed with a piece of filter paper, followed by being left free at room temperature for 30 minutes. Then, the skein was applied with a load of 0.000147 cN/dtex and 0.00177 cN/dtex (light load), followed by measurement of length X. Subsequently, the light load was replaced with a load (heavy load) of 0.044 cN/dtex while a load of 0.000147 cN/dtex was still being applied, and length Y was measured. Calculation follows using the following expression: crimping rate (%) = (Y - X)/Y × 100. Measurement of the crimping rate was carried out for five pieces of each of the composite-false-twisted yarn and the entangled combined-filament yarn, and the average value is regarded as the crimping rate of the entangled combined-filament yarn.

3. Number of entanglements of entangled combined-filament yarn

The woven or knitted fabric was raveled to collect an entangled combined-filament yarn as a sample. The number of entanglements of the entangled combined-filament yarn was measured according to a hook method specified in JIS L1013 8.15. A specific measurement method is as follows. The number of entanglements is also expressed as the entangled degree sometimes.

First, one end of the sample was attached to an upper grip of a suspension apparatus having appropriate performance, and a weight (2.94 mN × indicated tex number) at a position about 70 cm below the grip portion, so that the sample was vertically suspended. The sample was marked at a position about 2 cm below the grip portion and at a position about 52 cm below the grip portion.

The load was removed, a hook (in the form of a needle having a diameter of 0.5 mm to 1.0 mm, with a lateral surface finished smooth) was inserted into the sample at the 2 cm-marked position downward so as to divide the yarn bundle into two parts, a length L (unit: mm) to a position at which the hook was stopped by intertwinement of the yarn from the 52 cm-marked position was measured, and the number of entanglements per meter was calculated from the following expression. The average value of 50 measurements was determined.

$$\text{the number of entanglements} = 1000/L$$

4. Yarn length difference of composite-false-twisted yarn

A composite-false-twisted yarn was separately collected in the process of obtaining the entangled combined-filament yarn, the composite-false-twisted yarn was suspended from a vertical stand provided with a scale while a load of 0.1 g/dtex was applied, and the yarn was marked at two positions with a black marker pen in such a manner that the marks were vertically arranged at an interval of 1 m. Next, the composite-false-twisted yarn was carefully separated into a fiber group of polyester fiber A and a fiber group of polyester fiber B with a pair of tweezers while the position of the upper mark was fixed. Thereafter, a load of 0.1 g/dtex was applied to each of the fiber groups of polyester fibers A and B, and the length of each of the fiber groups was measured. Thereafter, the yarn length difference was calculated in accordance with the expression: yarn length difference (%) = (length of fiber group polyester A - length of fiber group of polyester B) / length of fiber group of polyester B × 100. The yarn length difference was measured for five pieces of composite-false-twisted yarn, and the average thereof was defined as a yarn length difference.

5. Water-repellent performance (water-droplet-moving angle) of surface of woven or knitted fabric

The water-droplet-moving angle of a surface of the woven or knitted fabric, which had been treated with a water-repellent agent, was measured. For the water-droplet-moving angle, 0.2 mL of water was gently dropped to a surface of a woven or knitted fabric (surface on a side opposite to the moisture-permeable waterproof layer) in a horizontal sample attached on a horizontal plate, the horizontal plate was gently tilted, and the angle of the horizontal plate at which the water droplet started to roll down was measured. The measurement was performed in both the longitudinal direction and the lateral direction.

6. Resistance to water penetration (waterproofness)

The resistance to water penetration (waterproofness) of the laminated fabric was measured in accordance with Method B specified in JIS L 1092: 2009. A specific measurement method is as follows.
Five test pieces of about 150 mm × 150 mm were collected. The test piece was attached to a water resistance tester (high water pressure) ("WP-1000K" manufactured by DAIEI KAGAKU SEIKI MFG. co., ltd.) in such a manner that the front side of the test piece came into contact with water, water was supplied into a cylinder, a piston handle was turned to apply a water pressure at a rate of 100 kPa per minute, and the water pressure (kPa) was read when water came out to the back side of the test piece at three positions. The average value of five measurements was rounded off to a one decimal place.

7. Water vapor permeability

The water vapor permeability of the laminated fabric was measured in accordance with Method B-1 (potassium acetate method) specified in JIS L 1099: 2012. A specific measurement method is as follows.
Three test pieces of about 200 mm × 200 mm were collected. The test piece was attached to a test piece support frame (in the form of a cylinder having an inner diameter of 80 mm, a height of 50 mm and a thickness of 3 mm) with a rubber band in such a manner that the back surface (moisture-permeable waterproof layer side or lining fiber fabric side) of the test piece faced outside the support frame. The test piece support frame was fixed at a depth of about 10 mm in a water bath so as to sufficiently immerse the test piece in the water bath, and left standing for 15 minutes or more, the water bath being placed in a thermostat and filled with water at 23°C. Air was circulated at a temperature of 30 ± 2°C in the thermostat.
Next, a moisture-permeable cup (in the form of a cylinder having a diameter of 56 mm and closed at one bottom surface) was filled with a moisture absorbent (potassium acetate) up to about 2/3 of the volume of the moisture-permeable cup while the moisture absorbent was kept at a temperature of about 23°C, a water vapor permeability measuring auxiliary film having a size of about 100 mm × 100 mm was placed on the top of the moisture-permeable cup, the edge portion of the film was made to follow the moisture-permeable cup, and the film was attached to the moisture-permeable cup with a rubber band to obtain a specimen. The mass ($a_5$) of the specimen was measured to a unit of 1 mg with the film attachment side facing upward. Immediately after the measurement was performed, the specimen was turned upside down, and placed in the test piece support frame fixed in the water bath. The specimen was taken out after 15 minutes, and inverted, and the mass ($a_6$) was measured to a unit of 1 mg.
The water vapor permeability was calculated in accordance with the following calculation formula, and the average value of three measurements was rounded off to an integer, and presented as a test result.

[Expression 3]

$$P_{B1} = (a_6 - a_5) / S_{B1}$$

where

$P_{B1}$: water vapor permeability (g/m$^2$•h)
$a_6 - a_5$: change rate (g/h) obtained by converting change rate (mg/min) of mass of specimen per 15 minutes to grams per hour
$S_{B1}$: moisture permeation area (bottom area of moisture-permeable cup, $3.14 \times 0.028$ m $\times 0.028$ m (m$^2$)

8. Peel strength

The peel strength between the woven fabric and the moisture-permeable waterproof layer in the laminated fabric was measured in accordance with the method specified in JIS L 1089. A specific measurement method is as follows.
The laminated fabric was cut into five pieces in each of a longitudinal direction (direction parallel to warp) and a lateral direction (direction parallel to weft) in such a manner that each piece had a width of 25 mm and a length of 150 mm. These pieces were used as test pieces. The woven fabric and the moisture-permeable waterproof layer were peeled from each other at a region of about 50 mm from the end of the test piece in the length direction, and in a tensile tester with an autographic recording device (Autograph) ("AG-1000G manufactured by Shimadzu Corporation), the distance between test piece grips was set to 50 mm, and the end portions of the peeled woven fabric and moisture-permeable waterproof layer were held. The tension speed was set to 100 mm/min, the fabric and the moisture-permeable waterproof layer were separated from each other by 50 mm, and for the maximum values (cN) shown at the time of peeling, the three largest values in the descending order and the three smallest values in the ascending order were measured. The average value of the total six maximum values was calculated, and the average value of five measurements in each of the longitudinal direction and the lateral direction was rounded off to one decimal place.

9. Tear strength

The tear strength of the laminated fabric was measured in accordance with Method A-1 specified in JIS L 1096: 2010. A specific measurement method is as follows.
The laminated fabric was cut into three pieces in each of a longitudinal direction (direction parallel to warp) and a lateral direction (direction parallel to weft) in such a manner that each piece had a width of 25 mm and a length of 150 mm. These pieces were used as test pieces. A cut of 100 mm from one end portion in the length direction was made at the central portion of the short side of the test piece. That is, the test piece was unbroken at an end portion of 50 mm in the length direction. Thereafter, in a tensile tester with an autographic recording device including a clamp having a width of 50 mm (Autograph) ("AG-1000G manufactured by Shimadzu Corporation), the distance between test piece grips was set to 100 mm, and the two end portions separated by the cut were held at right angle by upper and lower clams, respectively, in accordance with the single tongue method. The tension speed was set to 100 mm/min, and the maximum load [tear strength (N)] was measured at the time of tearing the fabric in each of the longitudinal direction and the lateral direction. The average value for each of the tear strength in the longitudinal direction and the tear strength in the lateral direction was calculated, and rounded off to one decimal place.

[Manufacturing of laminated fabric]

(Example 1)

A 84-filament highly-oriented undrawn polyester yarn A having a degree of elongation of 103%, a monofilament fineness of 0.54 dtex and a total fineness of 45 dtex was prepared. On the other hand, a 12-filament highly-oriented undrawn polyester yarn B having a degree of elongation of 130%, a monofilament fineness of 3.25 dtex and a total fineness of 39 dtex was prepared. The highly-oriented undrawn polyester yarns A and B were subjected to a method for manufacturing an entangled combined-filament yarn as shown in Fig. 1. A disc-type false-twisting apparatus 4 was used, and composite-false-twisted conditions and combining and entangling conditions were set as described below, so that a 96-filament entangled combined-filament yarn having a fineness of 63 dtex was obtained. In the entangled combined-filament yarn, the mass ratio of polyester fiber A and polyester fiber B (A/B) was 57/43. In addition, in the obtained entangled combined-filament yarn, protrusions were continuously formed by loops and slack of polyester fiber A, and an air-holding layer formed by loosely intertwining thin polyester fibers A is formed inside the protrusions (at the inside of the entangled combined-filament yarn).

<Composite-false-twisting conditions>

Surface speed of feeding roller 1: 211 m/minute
Draw ratio of highly-oriented undrawn polyester yarn B: 1.15
Surface speed of first take-up roller 2: 243 m/minute
Temperature of heater 3: (contact-type heater) 165°C
Twisting direction: Z direction
Disc structure: 1-6-1
K Value: 1.0
Draw ratio in twisting: 1.24
Surface speed of second take-up roller 5: 300 m/minute

<Combining and entangling conditions>

Fluid nozzle 6: interlacing nozzle
Air pressure: 0.11 MPa
Overfeed rate: 1.5%
Surface speed of third take-up roller 7: 295 m/minute
Next, in a water jet weaving machine (manufactured by Tsudakoma Corp.), a 72-filament drawn polyester yarn having a fineness of 33 dtex and the entangled combined-filament yarn obtained as described above were disposed as a warp and a weft, respectively, in an untwisted state, and a gray fabric of a ripstop weave as shown in Fig. 2 was woven.
The obtained gray fabric was scoured, and then dyed using a dispersion dye. Thereafter, a 5% aqueous dispersion liquid of a fluorine-based water-repellent agent emulsion ("AsahiGuard AG-E092 (trade name)" manufactured by Asahi Glass Co., Ltd.) was applied to the fabric by a padding method (pickup ratio: 40%). The fabric was dried, and then subjected to heat treatment at 170°C for 40 seconds to obtain a woven fabric having a warp density of 214 filaments/2.54 cm, a weft density of 118 filaments/2.54 cm and a cover factor of 2166.
Next, a 14 $\mu$m-thick urethane film was laminated onto a release paper by a comma coater, and dried to obtain a moisture-permeable waterproof layer. Next, a urethane-based adhesive was applied to one surface of the woven fabric so as to have a thickness of 40 $\mu$m using a gravure roll with a coating area of 80%, and bonded to the moisture-permeable waterproof layer by thermocompression bonding, and aging was performed at 40°C for 3 days to cure the adhesive layer, thereby obtaining a laminated fabric of Example 1.

(Example 2)

To the laminated fabric obtained in Example 1, a urethane-based adhesive was applied on the moisture-permeable waterproof layer side so as to have a thickness of 30 $\mu$m using a gravure roll with a coating area of 80%, and a tricot knitted fabric as a lining fiber fabric was bonded thereto by thermocompression bonding. In the tricot knitted fabric, nylon filaments (20 dtex) were used for a front reed and a back reed, the density was 51 courses/2.54 cm and 33 wales/2.54 cm, and the mass per unit area was 64 g/m$^2$. Aging was performed at 40°C for 3 days to harden the adhesive layer, thereby obtaining a laminated fabric of Example 2.

(Example 3)

A target laminated fabric was obtained by the same method as in Example 2 except that with respect to Example 2, the woven fabric was subjected to calender processing.

(Example 4)

A laminated fabric of Example 4 was obtained by the same method as in Example 3 except that with respect to Example 3, the moisture-permeable waterproof layer was formed by a coating method. Specifically, to the woven fabric subjected to calender processing, a polyurethane resin was applied by a comma coater using a known wet coating method as the coating method, and the woven fabric was caused to pass through a coagulation bath, then dried in a tenter, and then aged at 40°C for 3 days to form a 14 $\mu$m-thick moisture-permeable waterproof layer.

(Example 5)

A target laminated fabric was obtained by the same method as in Example 2 except that with respect to Example 2, the highly-oriented undrawn yarn A to be used was changed to a 56-filament yarn having a degree of elongation of 107%, a monofilament fineness of 0.89 dtex and a total fineness of 50 dtex, so that a 84-filament entangled combined-filament yarn having a fineness of 65 dtex was obtained, and the fabric had a weft density of 116 filaments/2.54 cm. In the used entangled combined-filament yarn, the mass ratio of polyester fiber A and polyester fiber B (A/B) was 58/42. In addition, in the used entangled combined-filament yarn, protrusions were continuously formed by loops and slack of polyester fiber A, and an air-holding layer formed by loosely intertwining thin polyester fibers A is formed inside the protrusions (at the inside of the entangled combined-filament yarn).

(Example 6)

A laminated fabric including a woven fabric having a cover factor of 2438 was obtained by the same method as in Example 2 except that with respect to Example 2, the fabric subjected to dyeing processing had a weft density of 150 filaments/2.54 cm.

(Example 7)

A laminated fabric including a woven fabric having a cover factor of 1823 was obtained by the same method as in Example 2 except that with respect to Example 2, the fabric subjected to dyeing processing had a warp density of 177 filaments/2.54 cm and a weft density of 100 filaments/2.54 cm.

(Example 8)

A target laminated fabric was obtained by the same method as in Example 2 except that with respect to Example 2, the moisture-permeable waterproof layer had a thickness of 3 $\mu$m.

(Example 9)

A target laminated fabric was obtained by the same method as in Example 2 except that with respect to Example 2, the moisture-permeable waterproof layer had a thickness of 40 $\mu$m.

(Example 10)

A target laminated fabric was obtained by the same method as in Example 2 except that with respect to Example 2, the adhesive used for bonding the moisture-permeable waterproof layer and the lining fiber fabric and bonding the woven fabric and the moisture-permeable waterproof layer was an olefin-based adhesive.

(Example 11)

A target laminated fabric was obtained by the same method as in Example 2 except that with respect to Example 2, the adhesive coating area was 20%.

(Example 12)

A target laminated fabric was obtained by the same method as in Example 2 except that with respect to Example 2, the thickness of the adhesive was 3 $\mu$m.

(Example 13)

A target laminated fabric was obtained by the same method as in Example 2 except that with respect to Example 2, the thickness of the adhesive was 120 $\mu$m.

(Comparative Example 1)

As a woven fabric, a fabric woven using a 72-filament drawn polyester yarn having a fineness of 33 dtex as a warp, and a 168-filament drawn false-twisted polyester yarn having a monofilament fineness of 0.42 dtex and a total fineness of 72 dtex as a weft was used. In the drawn false-twisted polyester yarn, protrusions were not formed on the surface. A laminated fabric including a woven fabric having a cover factor of 2179 was obtained by performing water-repellent processing and laminating a moisture-permeable waterproof layer and a lining fiber fabric using the same method as in Example 2 except that the fabric was subjected to dyeing processing to obtain a fabric of ripstop weave (warp density: 214 filaments/2.54 cm and weft density: 112 filaments/2.54 cm) as shown in Fig. 2.

(Comparative Example 2)

A target laminated fabric having a cover factor of 2438 was obtained by the same method as in Example 2 except that with respect to Example 2, the highly-oriented undrawn yarn A to be used was changed to a 36-filament yarn having a degree of elongation of 107%, a monofilament fineness of 1.38 dtex and a total fineness of 50 dtex, so that a 48-filament entangled combined-filament yarn having a fineness of 65 dtex was obtained, and the fabric had a weft density of 116 filaments/2.54 cm. In the entangled combined-filament yarn, the mass ratio of polyester fiber A and polyester fiber B (A/B) was 58/42. In the used entangled combined-filament yarn, protrusions were formed.

(Comparative Example 3)

A laminated fabric including a woven fabric having a cover factor of 2850 was obtained by the same method as in Example 2 except that with respect to Example 2, the fabric subjected to dyeing processing had a warp density of 294 filaments/2.54 cm and a weft density of 144 filaments/2.54 cm.

(Comparative Example 4)

A laminated fabric including a woven fabric having a cover factor of 1370 was obtained by the same method as in Example 2 except that with respect to Example 2, the fabric subjected to dyeing processing had a warp density of 140 filaments/2.54 cm and a weft density of 70 filaments/2.54 cm.

[Test results]

Evaluation results for the laminated fabrics of Examples 1 to 13 and Comparative Examples 1 to 4 are shown in Tables 1 and 2.

[Table 1]

| Measurement items | | Unit | Example 1 | Example 2 | Example 3 | Example 4 | Example 5 | Example 6 | Example 7 | Comparative Example 1* | Comparative Example 2 | Comparative Example 3 | Comparative Example 4 |
|---|---|---|---|---|---|---|---|---|---|---|---|---|---|
| Polyester fiber A | Monofilament fineness | dtex | 0.41 | 0.41 | 0.41 | 0.41 | 0.72 | 0.41 | 0.41 | 0.42 | 1.1 | 0.41 | 0.41 |
| | Total fineness | dtex | 34.8 | 34.8 | 34.8 | 34.8 | 37.8 | 34.8 | 34.8 | 71.0 | 37.9 | 34.8 | 34.8 |
| Polyester fiber B | Monofilament fineness | dtex | 2.26 | 2.26 | 2.26 | 2.26 | 2.26 | 2.26 | 2.26 | - | 2.26 | 2.26 | 2.26 |
| | Total fineness | dtex | 27.1 | 27.1 | 27.1 | 27.1 | 27.1 | 27.1 | 27.1 | - | 27.1 | 27.1 | 27.1 |
| Entangled combined-filament yarn | Total fineness | dtex | 63.0 | 63.0 | 63.0 | 63.0 | 64.9 | 63.0 | 63.0 | 71 | 65 | 63.0 | 63.0 |
| | crimping rate | % | 46.0 | 46.0 | 46.0 | 46.0 | 47.1 | 46.0 | 46.0 | 37.0 | 47.5 | 46.0 | 46.0 |
| | Number of entanglements | number/m | 126 | 126 | 126 | 126 | 118 | 126 | 126 | 108 | 92 | 126 | 126 |
| | Yarn length difference | % | 3.1 | 3.1 | 3.1 | 3.1 | 3.1 | 3.1 | 3.1 | 0 | 3.1 | 3.1 | 3.1 |

(continued)

| Measurement items | | Unit | Example 1 | Example 2 | Example 3 | Example 4 | Example 5 | Example 6 | Example 7 | Comparative Example 1* | Comparative Example 2 | Comparative Example 3 | Comparative Example 4 |
|---|---|---|---|---|---|---|---|---|---|---|---|---|---|
| Laminated fabric | Cover factor | - | 2166 | 2166 | 2166 | 2166 | 2164 | 2438 | 1823 | 2179 | 2438 | 2850 | 1370 |
| | Water-droplet-moving angle (longitudinal) | degrees | 45.5 | 36.1 | 57.1 | 59.4 | 37.3 | 33.8 | 49.2 | 69.0 or more | 67.2 | 63.7 | 63.5 |
| | Water-droplet-moving angle (lateral) | degrees | 42.9 | 35.6 | 50.4 | 43.6 | 36.9 | 33.4 | 45.1 | 69.0 or more | 66.8 | 62.1 | 61.2 |
| | Water bearing pressure | kPa | 155 | 277 | 290 | 137 | 275 | 295 | 260 | 250 | 255 | 310 | 240 |
| | water vapor permeability | $g/m^2 \cdot 24h$ | 25000 | 22300 | 21000 | 17000 | 22000 | 20000 | 23500 | 21600 | 22400 | 18000 | 23600 |
| | Peel strength (longitudinal) | N/2.54 cm | 10.1 | 13.1 | 10.8 | 20.7 | 12.9 | 11.5 | 19.7 | 7.8 | 22.7 | 10.1 | 21.8 |
| | Peel strength (lateral) | N/2.54 cm | 9.9 | 13.0 | 10.8 | 19.8 | 12.8 | 11.7 | 19.6 | 7.7 | 22.2 | 10.1 | 21.5 |
| | Tear strength (longitudinal) | N | 11.0 | 22.0 | 14.6 | 11.7 | 23.2 | 18.6 | 23.3 | 19.8 | 20.2 | 10.1 | 6.2 |
| | Tear strength (lateral) | N | 10.4 | 19.7 | 12.3 | 11.2 | 21.4 | 12.7 | 20.1 | 17.5 | 21.3 | 7.6 | 6.7 |
| * In Comparative Example 1, a fabric was obtained using one kind of polyester fiber. | | | | | | | | | | | | | |

[Table 2]

| | Measurement items | Unit | Example 8 | Example 9 | Example 10 | Example 11 | Example 12 | Example 13 |
|---|---|---|---|---|---|---|---|---|
| Polyester fiber A | Monofilament fineness | dtex | 0.41 | 0.41 | 0.41 | 0.41 | 0.41 | 0.41 |
| | Total fineness | dtex | 34.8 | 34.8 | 34.8 | 34.8 | 34.8 | 34.8 |
| Polyester fiber B | Monofilament fineness | dtex | 2.26 | 2.26 | 2.26 | 2.26 | 2.26 | 2.26 |
| | Total fineness | dtex | 27.1 | 27.1 | 27.1 | 27.1 | 27.1 | 27.1 |
| | Total fineness | dtex | 63.0 | 63.0 | 63.0 | 63.0 | 63.0 | 63.0 |
| | crimping rate | % | 46.0 | 46.0 | 46.0 | 46.0 | 46.0 | 46.0 |
| Entangled combined-filament yarn | Number of entanglements | number/m | 126 | 126 | 126 | 126 | 126 | 126 |
| | Yarn length difference | % | 3.1 | 3.1 | 3.1 | 3.1 | 3.1 | 3.1 |
| | Cover factor | - | 2166 | 2166 | 2166 | 2166 | 2166 | 2166 |
| Laminated fabric | Water-droplet-moving angle (longitudinal) | degrees | 35.9 | 36.2 | 38.2 | 33.1 | 36.0 | 36.4 |
| | Water-droplet-moving angle (lateral) | degrees | 35.5 | 35.8 | 37.8 | 33.9 | 35.5 | 35.1 |
| | Water bearing pressure | kPa | 118 | 253 | 127 | 163 | 122 | 263 |
| | water vapor permeability | g/m²·24 h | 25800 | 11500 | 19500 | 26100 | 29200 | 17700 |
| | Peel strength (longitudinal) | N/2.54 cm | 14.1 | 9.1 | 5.4 | 3.7 | 4.1 | 12.8 |
| | Peel strength (lateral) | N/2.54 cm | 14.3 | 9.6 | 5.0 | 3.7 | 3.9 | 13.0 |
| | Tear strength (longitudinal) | N | 7.6 | 12.8 | 22.2 | 21.7 | 18.5 | 14.7 |
| | Tear strength (lateral) | N | 6.6 | 11.7 | 19.5 | 21.4 | 17.7 | 14.3 |

The laminated fabric obtained in each of Examples 1 to 13 was excellent in water repellency, and had sufficiently high peel strength between the woven fabric and the moisture-permeable waterproof layer. In Example 2, a lining fiber fabric was laminated, and therefore the laminated fabric of Example 2 was superior in all of water repellency, resistance to water penetration, peel strength and tear strength to the laminated fabric of Example 1.

In addition, in the laminated fabric of Example 2, the fabric was not subjected to calender processing, and therefore protrusions were sufficiently maintained to exhibit further excellent water repellency as compared to the laminated fabric of Example 3. In addition, the anchor effect was sufficiently developed at protrusions on a surface of the woven fabric, so that further excellent peel strength was obtained.

The laminated fabric of Example 2 had a smaller monofilament fineness of polyester fiber A, and hence a further smaller water-droplet-moving angle as compared to the laminated fabric of Example 5.

The laminated fabric of Example 2 had a larger cover factor, and hence a further smaller water-droplet-moving angle as compared to the laminated fabric of Example 7.

The laminated fabric of Example 2 had a larger moisture-permeable waterproof layer thickness, and was therefore slightly inferior in texture feeling, but superior in resistance to water penetration as compared to the laminated fabric of Example 8.

The laminated fabric of Example 2 had a larger moisture-permeable waterproof layer thickness, and therefore had a higher water vapor permeability and a superior texture feeling as compared to the laminated fabric of Example 9.

As compared to the laminated fabric of Example 10 in which an olefin-based adhesive was used, the laminated fabric of Example 2 was superior in peel strength because a favorable adhesive was used.

The laminated fabric of Example 2 had a larger adhesive coating area, and was therefore superior in peel strength as compared to the laminated fabric of Example 11.

The laminated fabric of Example 2 had a larger adhesive thickness, and was therefore superior in peel strength as compared to the laminated fabric of Example 12.

The laminated fabric of Example 2 had a smaller adhesive thickness, and was therefore superior in peel strength and texture feeling as compared to the laminated fabric of Example 13.

In the laminated fabric of Example 4, the moisture-permeable waterproof layer was laminated by a coating method, and therefore the woven fabric was subjected to calender processing for the purpose of uniform application of the layer. The layer was easily applied, but protrusions were reduced, and therefore water repellency was deteriorated as compared to Example 3.

The laminated fabric of Example 6 had a larger cover factor, and hence a further smaller water-droplet-moving angle as compared to Example 2.

In the laminated fabric of Comparative Example 1, the entangled combined-filament yarn specified in the present invention was not used, and therefore the obtained laminated fabric did not have protrusions on a surface of the woven fabric, and was poor in water repellency. Further, since protrusions were not formed, an anchor effect was not obtained, and the laminated fabric was not excellent in peel strength.

In the laminated fabric of Comparative Example 2, the monofilament fineness of polyester fiber A was excessively large, and therefore not only the fiber was too rigid to form an air-holding layer, but also combining with polyester fiber B was insufficient, so that an interfacing failure easily occurred, and thus protrusions were not sufficiently maintained, and further, the contact area between the woven or knitted fabric and a water droplet increased, resulting in poor water repellency.

The laminated fabric of Comparative Example 3 had an excessively large cover factor, so that irregularities were not sufficiently developed, and thus the laminated fabric was poor in water repellency. The laminated fabric of Comparative Example 4 had an excessively small cover factor, and was therefore poor in tear strength.

DESCRIPTION OF REFERENCE SIGNS

1: feeding roller
2: First take-up roller
3: Heater
4: False-twisting apparatus
5: Second take-up roller
6: Second delivery roller
7: Third take-up roller
8: Winding roller
9: Package of entangled combined-filament yarn
YA: Package of highly-oriented undrawn polyester yarn A

YB: Package of highly-oriented undrawn polyester yarn B

**Claims**

1. A laminated fabric comprising a moisture-permeable waterproof layer on one surface of a woven or knitted fabric, wherein
   the woven or knitted fabric contains an entangled combined-filament yarn including polyester fiber A having a monofilament fineness of 0.2 to 0.9 dtex and polyester fiber B having a monofilament fineness of 1.0 to 5.0 dtex, the entangled combined-filament yarn is false-twist-crimped as a whole, and the mass ratio of the polyester fiber A and the polyester fiber B (A/B) is in a range of 20/80 to 80/20,
   the entangled combined-filament yarn has protrusions made of polyester fiber A on a surface portion,
   the woven or knitted fabric has a cover factor of 1800 to 2800, and
   a water-repellent agent is adhered on a surface of the woven or knitted fabric on a side opposite to the moisture-permeable waterproof layer.

2. The laminated fabric according to claim 1, wherein the crimping rate of the entangled combined-filament yarn is in a range of 10 to 55%.

3. The laminated fabric according to claim 1 or 2, wherein the number of entanglements formed by the entangled combined-filament yarn is in a range of 90/m to 200/m.

4. The laminated fabric according to any one of claims 1 to 3, wherein the moisture-permeable waterproof layer is formed of a polyurethane resin.

5. The laminated fabric according to any one of claims 1 to 4, wherein an adhesive layer is present between the woven or knitted fabric and the moisture-permeable waterproof layer.

6. The laminated fabric according to any one of claims 1 to 5, wherein a lining fiber fabric is laminated on the moisture-permeable waterproof layer.

7. The laminated fabric according to any one of claims 1 to 6, wherein the water-droplet-moving angle of a surface of the woven or knitted fabric on a side opposite to the adhesive layer is 60 degrees or less.

8. The laminated fabric according to any one of claims 1 to 7, wherein the resistance to water penetration is 100 kPa or more as measured in accordance with Method B specified in JIS L 1092: 2009.

9. The laminated fabric according to any one of claims 1 to 8, wherein the water vapour permeability is 10000 $g/m^2{\cdot}24h$ or more as measured in accordance with Method B-1 specified in JIS L 1099: 2012.

10. The laminated fabric according to any one of claims 1 to 9, wherein the peel strength between the woven or knitted fabric and the moisture-permeable waterproof layer is 5 N/2.54cm or more as measured in accordance with the method specified in JIS L 1089.

11. A method for manufacturing the laminated fabric according to any one of claims 1 to 4 and 6 to 10, the method comprising the step of:

    forming a moisture-permeable waterproof layer on one surface of a woven or knitted fabric by applying to the surface a resin for forming the moisture-permeable waterproof layer, wherein
    the woven or knitted fabric contains an entangled combined-filament yarn including polyester fiber A having a monofilament fineness of 0.2 to 0.9 dtex and polyester fiber B having a monofilament fineness of 1.0 to 5.0 dtex, the entangled combined-filament yarn is false-twist-crimped as a whole, and the mass ratio of the polyester fiber A and the polyester fiber B (A/B) is in a range of 20/80 to 80/20,
    the entangled combined-filament yarn has protrusions made of polyester fiber A on a surface portion,
    the woven or knitted fabric has a cover factor of 1800 to 2800, and
    a water-repellent agent is adhered on a surface of the woven or knitted fabric on a side opposite to a surface to which the resin for forming the moisture-permeable waterproof layer is applied.

**12.** A method for manufacturing the laminated fabric according to any one of claims 1 to 10, the method comprising the steps of:

forming an adhesive layer on a woven or knitted fabric or a moisture-permeable waterproof layer; and
bonding the woven or knitted fabric and the moisture-permeable waterproof layer to each other with the adhesive layer interposed therebetween, wherein
the woven or knitted fabric contains an entangled combined-filament yarn including polyester fiber A having a monofilament fineness of 0.2 to 0.9 dtex and polyester fiber B having a monofilament fineness of 1.0 to 5.0 dtex,
the entangled combined-filament yarn is false-twist-crimped as a whole, and the mass ratio of the polyester fiber A and the polyester fiber B (A/B) is in a range of 20/80 to 80/20,
the entangled combined-filament yarn has protrusions made of polyester fiber A on a surface portion,
the woven or knitted fabric has a cover factor of 1800 to 2800, and
a water-repellent agent is adhered on a surface of the woven or knitted fabric on a side opposite to a surface that is in contact with the adhesive layer.

FIG. 1

FIG. 2

## INTERNATIONAL SEARCH REPORT

| International application No. |
| --- |
| PCT/JP2017/019948 |

A. CLASSIFICATION OF SUBJECT MATTER
*B32B5/24*(2006.01)i, *B32B27/40*(2006.01)i, *D02G3/04*(2006.01)i, *D06M15/564*
(2006.01)i

According to International Patent Classification (IPC) or to both national classification and IPC

B. FIELDS SEARCHED

Minimum documentation searched (classification system followed by classification symbols)
B32B1/00-43/00, D02G1/00-3/48, D02J1/00-13/00, D06M13/00-15/715,
D03D1/00-27/18, D04B1/00-1/28, D04B21/00-21/20

Documentation searched other than minimum documentation to the extent that such documents are included in the fields searched
Jitsuyo Shinan Koho           1922-1996   Jitsuyo Shinan Toroku Koho   1996-2017
Kokai Jitsuyo Shinan Koho     1971-2017   Toroku Jitsuyo Shinan Koho   1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2015-098661 A  (Unitika Trading Co., Ltd.),<br>28 May 2015 (28.05.2015),<br>claims 1, 2, 6, 7; paragraphs [0002], [0009],<br>[0065], [0068]; examples<br>(Family: none) | 1-12 |
| Y | JP 2010-201811 A  (Teijin Fibers Ltd.),<br>16 September 2010 (16.09.2010),<br>claims 1, 8; paragraphs [0002], [0005], [0023];<br>examples<br>(Family: none) | 1-12 |
| Y | JP 2002-004178 A  (Toray Industries, Inc.),<br>09 January 2002 (09.01.2002),<br>claim 1; paragraphs [0005], [0038]<br>(Family: none) | 1-12 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 24 July 2017 (24.07.17) | 08 August 2017 (08.08.17) |

| Name and mailing address of the ISA/ | Authorized officer |
| --- | --- |
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.

PCT/JP2017/019948

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2014/185453 A1 (Asahi Kasei Fibers Corp.), 20 November 2014 (20.11.2014), claim 14; paragraphs [0002], [0025] & US 2016/075116 A1 claim 14; paragraphs [0002], [0064] & EP 2998422 A1 & CA 2912042 A1 & CN 105209674 A & KR 10-2015-0143753 A & RU 2015153047 A | 1-12 |
| A | JP 2012-122144 A (Teijin Fibers Ltd.), 28 June 2012 (28.06.2012), claims 1, 6 to 8; paragraph [0004]; examples (Family: none) | 1-12 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007231442 A
- JP 2002201463 A
- JP 5083666 A
- JP 4005786 A